# NEUE EUROPÄISCHE PATENTSCHRIFT

(11) **EP 1 141 567 B2**
(45) Veröffentlichungstag und Bekanntmachung des Hinweises auf die Entscheidung über den Einspruch: **29.09.2010**
(45) Hinweis auf die Patenterteilung: 02.05.2003
(21) Anmeldenummer: 99962164.2
(22) Anmeldetag: 26.11.1999
(51) Int. Cl.: F16D 23/02

(54) **SPANLOS GEFERTIGTER SYNCHRONRING MIT STRUKTURIERTEN REIBFLÄCHEN**
SYNCHRONIZATION RING FORMED BY A NON-CUTTING PROCESS AND PROVIDED WITH STRUCTURED FRICTION SURFACES
ANNEAU DE SYNCHRONISATION FABRIQUE SANS ENLEVEMENT DE COPEAUX, A SURFACES DE FROTTEMENT STRUCTUREES

(30) Priorität: 21.12.1998 DE 19858987
(43) Veröffentlichungstag der Anmeldung: 10.10.2001
(73) Patentinhaber: Schaeffler Technologies GmbH & Co. KG, 91074 Herzogenaurach (DE)
(72) Erfinder: SCHWUGER, Josef, D-91315 Höchstadt (DE); SINNER, Rudolf, D-91088 Bubenreuth (DE); KRAUS, Karl-Heinz, D-91074 Herzogenaurach (DE); WALDERT, Hartwig, D-91325 Aisch (DE)
(86) Internationale Anmeldenummer: PCT/EP1999/009164
(87) Internationale Veröffentlichungsnummer: WO 2000/037815

(56) Entgegenhaltungen:
- DE-A- 3 032 787
- DE-A- 3 212 720
- DE-B1- 2 810 945
- DE-C2- 3 609 879
- US-A- 5 038 628
- US-A- 5 105 522
- G.WEISSMANN & R.POSPISCHIL: "PRAZISIONSSCHMIEDESTUCKE FUR SCHALTGETRIEBE" ZEITSCHRIFT FUR WIRTSCHAFTLICHE FERTIGUNGEN & AUTOMATISIERUNG, Nr. 7, 1. Juli 1987 (1987-07-01), Seiten 141-142, XP002133651 MUNCHEN
- HERMANN FRANKE, NIKOLA DIMITROV, OTTO HENNINGER: 'Lueger Lexikon der Technik, Band 10 Lexikon der Bautechnik', Bd. 4, 1966, DEUTSCHE VERLAGS-ANSTALT GMBH, STUTTGART Seite 216

## Beschreibung

### Gebiet der Erfindung

Die Erfindung betrifft einen spanlos gefertigten Synchronring für eine Synchronisiereinrichtung eines Kraftfahrzeuggetriebes
- mit einem aus Blech geformten im wesentlichen konisch ausgebildeten Ringkörper,
- mit einer zur Längsmittelachse des Ringkörpers konisch verlaufenden äußeren Mantelfläche und
- mit einer zur Längsmittelachse des Ringkörpers konisch verlaufenden inneren Mantelfläche,
   wobei der Synchronring an zumindest einer der genannten Mantelflächen eine Reibfläche aufweist und die Reibfläche mit wenigstens einer Ölnut versehen ist.

### Hintergrund der Erfindung

Derartige Synchronringe werden in den verschiedensten Ausführungen als Außensynchronring, Innensynchronring und Zwischenring eingesetzt. In der Regel ist beim Außensynchronring an der inneren Mantelfläche, beim Innensynchronring an der äußeren Mantelfläche und beim Zwischenring für Mehrfachsynchronisiereinrichtungen an der inneren und der äußeren Mantelfläche eine Reibfläche ausgebildet. Reibpaarungen einander zugeordneter Synchronringe einer Synchronisiereinrichtung werden in der Regel durch das Zusammenwirken einer beschichteten und einer unbeschichteten Reibfläche gebildet.

Die beschichtete Reibfläche ist mit einem Reibbelag versehen, der z. B. aus einem Sinterwerkstoff oder einem Papierwerkstoff gebildet und auf die Oberfläche des Synchronringes aufgebracht ist.

Die Reibpaarung der Synchronringe einer Synchronisiereinrichtung ist verschiedensten Einflüssen ausgesetzt, die das Betriebs- und Verschleißverhalten der Synchronringe beeinflussen und gesonderte Ansprüche an die konstruktive Ausführung der Synchronringe stellen. Ein bedeutender Einfluß auf das Betriebs- und Verschleißverhalten hat dabei das zwischen den Reibringen befindliche Öl. Im kalten Zustand des Getriebes, insbesondere bei Temperaturen unter dem Gefrierpunkt, läßt sich das relativ zähe Öl nur schwer zwischen den Reibflächen verdrängen. Das Öl muß aber im Interesse der Schaltqualität innerhalb kürzester Zeit von den Reibflächen geräumt werden. Dazu werden bekanntlich Ölnuten in die Reibschicht eingebracht, durch deren Drainagewirkung das Öl schnell von den Reibflächen transportiert wird. Die Ölnuten sind dabei endweder in die beschichtete oder in die unbeschichtete Reibfläche eingebracht.

So ist in DE 30 32 787 A1 ein Außensynchronring beschrieben, in dessen Ringkörper axiale Ölnuten durch Stanzen und Prägen eingebracht sind. DE 27 44 994 C2 beschreibt einen weiteren Außensynchronring, dessen Reibbelag aus Papier durch einen Kalibriervorgang mit Ölnuten versehen ist. Ein Beispiel eines Zwischenringes beschreibt EP 0 303 606 B1. Dieser Synchronring der gattungsbildenden Art ist beidseitig mit einer beschichteten Reibfläche versehen, spanlos geformt und weist durch Hohlprägen eingebrachte in axialer Richtung ausgerichtete Ölnuten auf.

Die gestalterische Ausführung und Ausrichtung der Ölnuten auf der Reibfläche von Synchronringen erfolgt bisher vorwiegend nach den Regeln der Bearbeitungsrichtung bzw. Entformbarkeit, die beim spanenden oder spanlosen Einbringen der Nuten in die Reibfläche des Synchronringes zu beachten sind. Funktionelle Anforderungen, wie z. B. das Erzeugen einer gezielten Pumpund/oder Stauwirkung während des Schaltvorganges, können deshalb derartige Ölnuten nur bedingt oder zufällig erfüllen. Außerdem ist der Aufwand, um derartige Nuten in die Reibflächen einzubringen, häufig relativ hoch, da zusätzliche Arbeitsgänge für das Einbringen der Nut erforderlich sind.

Die beschriebene Wirkung der Ölnuten kann sich bei bestimmten Anwendungen wiederum nachteilig auf das Reib- bzw. Verschleißverhalten der Synchronringe auswirken. Die Reibflächen sind im betriebswarmen Zustand des Getriebes durch die Drainagewirkung der Ölnuten und durch fehlende Ölzirkulation in der Synchronisiereinrichtung nicht ausreichend mit Öl versorgt und verschleißen frühzeitig oder fressen. Fehlende Ölzirkulation bewirkt weiterhin Wärmestaus und verhindert das Abführen von Verschleißpartikeln aus der Reibzone der Synchronisiereinrichtung. Das wirkt sich wiederum nachteilig auf das Verschleißverhalten der Synchronringe aus.

Synchronisiereinrichtunge und Synchronringe nach dem Stand der Technik sind aus den vorhergenannten Gründen häufig in aufwendiger Weise mit zusätzlichen Ölversorgungsbohrungen und Aussparungen für den Ölaustausch versehen. So ist in DE 31 13 650 C2 eine Synchronisiereinheit beschrieben, die über gesonderte Ölbohrungen und Aussparungen ihrer Elemente mit der Ölversorgung des Getriebes verbunden ist.

### Zusammenfassung der Erfindung

Aufgabe der Erfindung ist es daher, einen Synchronring zu schaffen, dessen Reibfläche bedarfsweise gezielt vom Öl befreit oder ausreichend mit Öl versorgt ist und der sich kostengünstig herstellen läßt.

Diese Aufgabe wird nach Anspruch 1 gelöst.

Der Vorteil einer solchen Ausrichtung der Ölnuten ist:
Die Bewegung des Öls zwischen sich einander nähernden Reibflächen einer Reibpaarung ist nicht nur durch den üblicherweise wirkenden Verdrängungsdruck beeinflußt, sondern wird bedarfsweise durch das Ausnutzen der Wirkung der Fliehkraft und einer dadurch entstehenden Pumpwirkung zwischen den Reibflächen entfernt bzw. gestaut.

Die sich während des Synchronisiervorganges einander nähernden Konusflächen einer Reibpaarung erzeugen einen Verdrängungsdruck auf das Öl und drängen es somit über den Rand der Reibfläche und/oder in die vorhandenen Ölnuten und von dort ebenfalls zum Rand der Reibfläche. Dabei bewegt sich das Öl in diesen Nuten unter Wirkung der Fliehkraft in Richtung des großen Konusdurchmessers. Durch verschiedene Ausrichtung und Ausführung der Ölnuten stehen dem Anwender von Synchronringen gemäß Erfindung nachfolgend genannte Möglichkeiten und Effekte zur Verfügung:
- Das Öl wird schneller von den Reibflächen entfernt. Damit werden die Synchronisierzeiten verkürzt und somit der Schaltkomfort erhöht.
- In den Ölnuten werden Ölstaus erzeugt, die eine Schmierung gewährleisten und ein Fressen verhindern."
- Durch Ölnuten mit beidseitig offenen axialen Enden wird eine Pumpwirkung erzeugt, die Frischöl in die Ölnuten zieht und nach außen weiterleitet. Das Frischöl entfernt Verschleißpartikel aus der Reibpaarung, verhindert unzulässige Erwärmung und verbessert die Schmierung.

Die Ölnuten werden in einem spanlosen Umformgang in die Reibfläche eingearbeitet, wobei die Reibfläche aus dem Material des Bleches gebildet ist. Die Ölnuten können in Abhängigkeit von der verwendeten Technologie zur Herstellung der Synchronringe z. B. durch Prägen in die Platine vor dem Durchstellen des konusförmigen Ringes oder durch Rollieren in einen ringförmigen Hohlkörper eingebracht werden. Mit der Anwendung eines derartig ausgebildeten Synchronringes entfallen die Kosten, die entstehen, um Reibbeläge, z. B. aus Sintermetall oder einem Papierwerkstoff nachträglich durch Prägevorgänge mit Nuten zu versehen. Diese Reibbeläge werden auf die Reibfläche des Synchronringes aufgetragen, der dem erfindungsgemäßen Synchronring zur Bildung einer Reibpaarung zugeordnet ist. Ein Synchronring in erfindungsgemäßer Ausführung kann insbesondere in der Massenfertigung kostengünstig hergestellt werden, da das Einbringen der Nuten in der Arbeitsfolge des Formvorganges integriert ist und somit keine zusätzlichen Kosten verursacht.

Es sind nachfolgend beschriebene bevorzugte Ausführungsformen der Synchronringe vorgesehen:
- Die Reibfläche weist mehrere an ihrem Umfang verteilte, in sich geradlinig verlaufende und schräg zur Umfangsrichtung des Synchronringes ausgerichtete Ölnuten auf. Die Ölnuten können dabei beliebig zueinander, z. B. einander kreuzend angeordnet sein.
- Die Reibfläche weist mehrere an ihrem Umfang verteilte, in sich geradlinig verlaufende und schräg zur Umfangsrichtung des Synchronringes ausgerichtete Ölnuten auf, die parallel zueinander angeordnet sind.
- Die Reibfläche weist mehrere an ihrem Umfang verteilte spiralförmig verlaufende Ölnuten auf.
- Die Reibfläche weist eine oder mehrere an ihrem Umfang schraubenförmig umlaufende Ölnuten auf.

Die Querschnittsform der Nuten ist beliebig, und in Abhängigkeit von den Anforderungen wählbar. Bevorzugt sind jedoch verrundete Querschnitstformen einzusetzen, um evtl. im Betrieb auftretende Kerbspannungen zu vermeiden.

Die anfangs beschriebene Pump- bzw. Stauwirkung wird gemäß der Erfindung beeinflußt, indem jede einzelne Nut in ihrem Verlauf einen veränderlichen Querschnitt aufweist. So kann sich der Querschnitt einer Nut in ihrem Verlauf vom kleinen zum großen Konusdurchmesser des Synchronringes erweitern oder reduzieren. Ein derartiges Reduzieren ist möglich, indem die Nuttiefe und/oder die Nutbreite im Verlauf der Nut verändert wird.

Eine Ausgestaltung der Erfindung sieht vor, die Ölnuten in wenigstens eine bevorzugt an einem axialen Ende der Reibfläche angeordnete sowie am Umfang umlaufende Ringnut münden zu lassen. Diese Ringnut dient z. B. als Ölspeicher, um eine Mangelschmierung der Reibpaarung zu vermeiden.

Die Ölzirkulation in der Synchronisiereinheit wird verbessert, wenn mit den Ölnuten radiale Durchbrüche zusammenwirken. Diese radialen Durchbrüche sind in die Reibfläche eingebracht und erstrecken sich durch die Wandung des Synchronringes von einer Mantelfläche des Synchronringes zur anderen. Die Gestaltungsform dieser Durchbrüche ist beliebig, bevorzugt sind jedoch Langlöcher vorzusehen.

Synchronringe in einer Gestaltung nach Erfindung lassen sich als Außensynchronring, Innensynchronring und bevorzugt als Zwischenring ausführen. Die Ölnuten sind je nach Verwendungszweck des Synchronringes an den Reibflächen der inneren Mantelfläche und/oder der äußeren Mantelfläche ausgebildet.

### Kurze Beschreibung der Zeichnung

Die Erfindung wird nachfolgend anhand mehrerer Ausführungsbeispiele näher erläutert. Es zeigen:
- Figur 1 bis 9: Synchronringe nach dem Stand der Technik;
- Figur 10 und 11: Darstellungen alternativer Möglichkeiten der Anordnung von Ölnuten an einem Ausführungsbeispiel eines erfindungsgemäßen Synchronringes;
- Figur 12: eine vergrößerte Teilansicht eines Nutquerschnittes des Synchronringes nach Figur 11, im Schnitt entlang der Linie XII.

### Detaillierte Beschreibung der Zeichnung

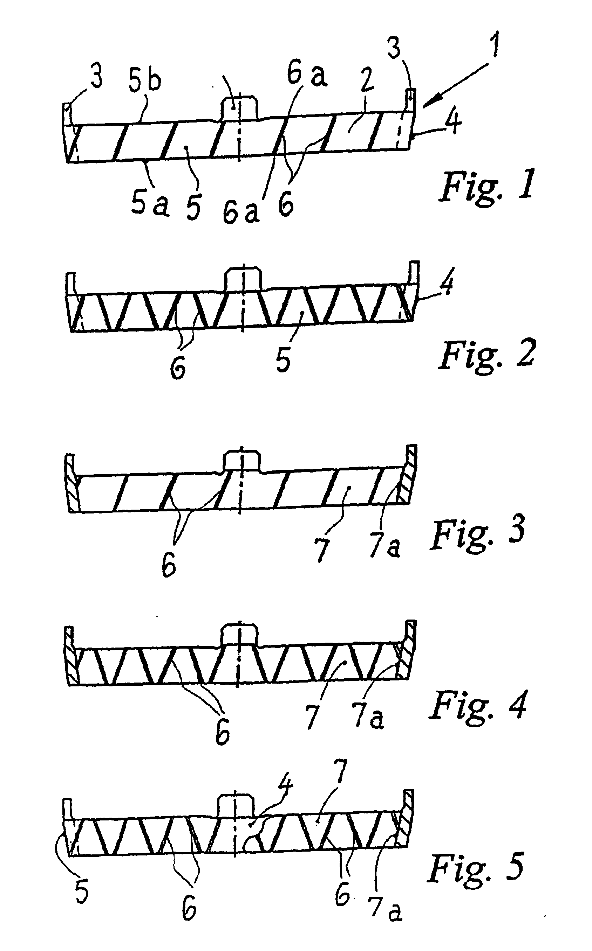

In Figur 1 ist mit 1 ein typisches Ausführungsbeispiel eines Zwischenringes dargestellt. Der Zwischenring 1 ist aus einem Ringkörper 2 und axial ausgerichteten Lappen 3 gebildet. Der Ringkörper 2 ist konisch gestaltet. Die äußere Mantelfläche 4 des Ringkörpers 2 ist als eine Reibfläche 5 ausgebildet. Vom ersten axialen Ende 5a der Reibfläche 5 zum zweiten axialen Ende 5b erstrekken sich mehrere am Umfang der Reibfläche 5 angeordnete Ölnuten 6. Die Ölnuten 6 verlaufen schräg zur Axialrichtung und zur Umfangsrichtung und sind parallel zueinander ausgerichtet und münden mit einem ersten axial offenen Ende 6a sowie einem zweiten axial offenen Ende 6b frei in die Umgebung des Zwischenringes 1.

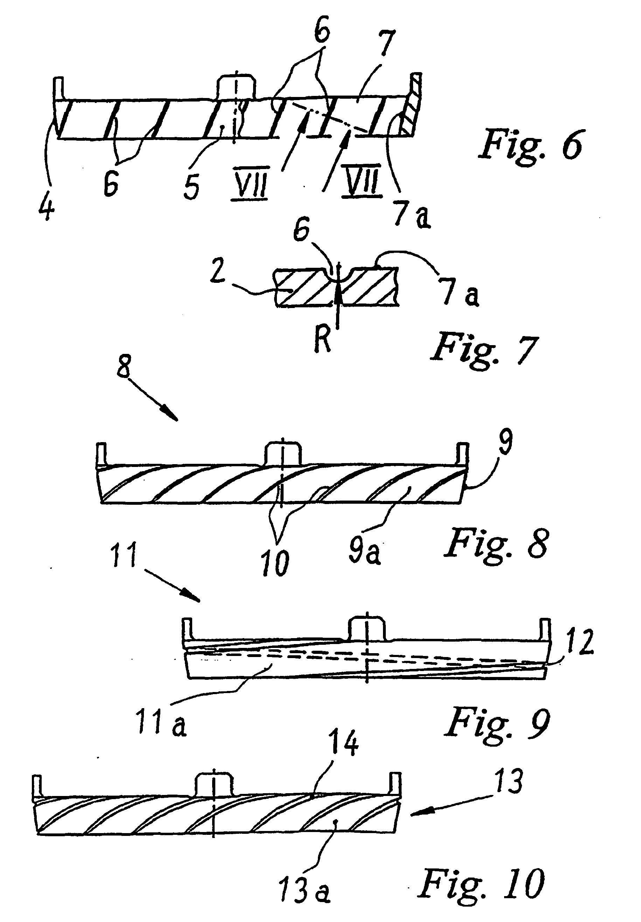

Figur 2 bis Figur 6 zeigen alternative Anordnungsmöglichkeiten von Ölnuten 6 an dem Zwischenring 1. Nach Figur 2 sind die Ölnuten 6 ebenfalls an der äußeren Mantelfläche 4 des Zwischenringes 1 ausgebildet, jedoch sind sie zueinander schräg ausgerichtet und spiegelbildlich angeordnet. Alternativ dazu zeigen Figur 3 und 4 parallel bzw. spiegelbildlich zueinander ausgerichtete Ölnuten 6 an einer Reibfläche 7a der inneren Mantelfläche 7 des Zwischenringes 1. Schließlich zeigen Figur 5 und Figur 6 den Zwischenring 1 mit an seiner äußeren Mantelfläche 4 und seiner inneren Mantelfläche 7 ausgebildeten Ölnuten 6. In Figur 7 wird im vergrößerten Maßstab ein Schnitt durch die Ölnut 6 dargestellt. Die Querschnittskontur der Ölnut 6 wird durch einen Radius R beschrieben.

In Figur 8 ist ein weiterer Zwischenring 8 dargestellt, der in seinem Grundaufbau dem des in Figur 1 bis Figur 6 dargestellten Zwischenringes 1 entspricht. An der äußeren Mantelfläche 9 des Synchronringes 8 sind in einer Reibfläche 9a mehrere am Umfang verteilte spiralförmig verlaufende Ölnuten 10 ausgebildet. Ein Zwischenring 11, dargestellt in Figur 9, ist mit einer schraubenförmig am Umfang einer Reibfläche 11a umlaufenden Ölnut 12 versehen. Figur 10 wiederum zeigt einen Zwischenring 13, bei dem an einer Reibfläche 13a mehrere am Umfang angeordnete spiralförmig verlaufende Ölnuten 14 ausgebildet sind, deren Breite und damit ihr Querschnitt, sich in ihrem Verlauf ändert.

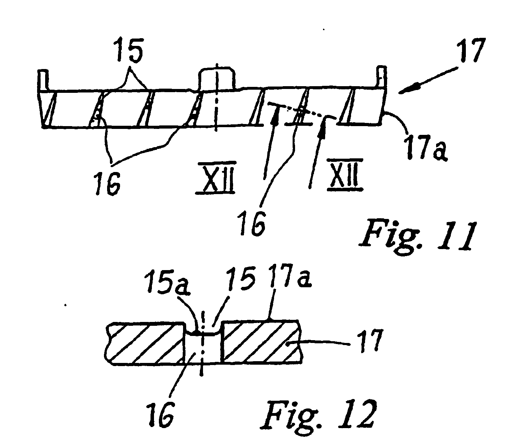

Figur 11 zeigt Ölnuten 15, die in eine Reibfläche 17a eingebracht sind und deren Breite sich ebenfalls ändert und die zusätzlich mit Durchbrüchen 16 zusammenwirken. Die Durchbrüche 16 sind, wie aus Figur 12 ersichtlich, in den Nutgrund 15a der Ölnut 15 des Zwischenringes 17 eingebracht. In Figur 12 ist außerdem zu erkennen, daß die Querschnittsform der Ölnut 15 im Nutgrund 15a verrundet ist.

### Bezugszeichen

- 1: Zwischenring
- 2: Ringkörper
- 3: Lappen
- 4: äußere Mantelfläche
- 5: Reibfläche
- 5a: erstes axiales Ende
- 5b: zweites axiales Ende
- 6: Ölnuten
- 6a: erstes axial offenes Ende
- 6b: zweites axial offenes Ende
- 7: innere Mantelfläche
- 7a: Reibfläche
- 8: Zwischenring
- 9: äußere Mantelfläche
- 9a: Reibfläche
- 10: Ölnut
- 11: Zwischenring
- 11a: Reibfläche
- 12: Ölnut
- 13: Zwischenring
- 13a: Reibfläche
- 14: Ölnut
- 15: Ölnut
- 15a: Nutgrund
- 16: Durchbruch
- 17: Zwischenring
- 17a: Reibfläche

## Patentansprüche

1. Spanlos gefertigter Synchronring (1, 8, 11, 13, 17) für eine Synchronisiereinrichtung eines Kraftfahrzeuggetriebes
- mit einem aus Blech geformten und im wesentlichen konisch ausgebildeten Ringkörper (2),
- mit einer zur Längsmittelachse des Ringkörpers (2) konisch verlaufenden äußeren Mantelfläche (4, 9),
- mit einer zur Längsmittelachse des Ringkörpers (2) konisch verlaufenden inneren Mantelfläche (7),
wobei der Synchronring (1, 8, 11, 13, 17) an zumindest einer der genannten Mantelflächen (4, 7, 9) eine Reibfläche (5, 9a, 11a, 13a, 17a) aufweist und die Reibfläche (5, 9a, 11a, 13a, 17a) mit wenigstens einer Ölnut (6, 10, 12, 14, 15) versehen ist,
**dadurch gekennzeichnet, daß** die Reibfläche (5, 9a, 11a, 13a, 17a) aus dem Material des Ringkörpers (2) gebildet ist und daß die Ölnut (6, 10, 12, 14, 15)
- spanlos eingebracht ist,
- sich von einem ersten axialen Ende (5a) der Reibfläche (5) zu einem zweiten axialen Ende (5b) der Reibfläche (5) erstreckt,
- in Längsrichtung gesehen abweichend von der Axialrichtung sowie der Umfangsrichtung des Synchronringes (1, 8, 11, 13, 17) verläuft und
- wenigstens ein axial offenes Ende (6a, 6b) aufweist, das mit einem der axialen Enden (5a, 5b) der Reibfläche (5) abschließt. (Fig. 8 - Fig. 11) und daß sich der Querschnitt der Ölnut (15) in ihrem Verlauf ändert.

2. Synchronring nach Anspruch 1, **dadurch gekennzeichnet, daß** die Reibfläche (5, 7a, 17a) mehrere Ölnuten (6, 15) aufweist und die Ölnuten (6, 15) am Umfang der Reibfläche (5, 9, 17a) verteilt angeordnet sind und daß die Ölnuten (6, 15) schräg zur Umfangsrichtung des Synchronringes (1, 17) verlaufen. (Fig. 11)

3. Synchronring nach Anspruch 1, **dadurch gekennzeichnet, daß** die Reibfläche (5, 7a, 17a) mehrere Ölnuten (6, 15) aufweist und die Ölnuten (6, 15) am Umfang der Reibfläche (5, 17a) verteilt angeordnet sind sowie schräg zur Umfangsrichtung des Synchronringes (1, 17, 18) verlaufen, und daß die Ölnuten (6, 15) jeweils parallel zueinander ausgerichtet sind. (Fig. 11)

4. Synchronring nach Anspruch 1, **dadurch gekennzeichnet, daß** die Reibfläche (9a, 13a) mehrere Ölnuten (10, 14) aufweist und die Ölnuten (10, 14) am Umfang der Reibfläche (9a, 13a) verteilt angeordnet sind und daß die Ölnuten spiralförmig verlaufen. (Fig. 10)

5. Synchronring nach Anspruch 1, **dadurch gekennzeichnet, daß** der Synchronring (17) an seinem Umfang verteilte sowie von der Reibfläche (17a) ausgehende radiale Durchbrüche (16) aufweist. (Fig. 11)

6. Synchronring nach Anspruch 5, **dadurch gekennzeichnet, daß** die radialen Durchbrüche (16) vom Nutgrund (15a) der Ölnut (15) ausgehen. (Fig. 11, Fig. 12)

7. Synchronring nach Anspruch 1, **dadurch gekennzeichnet, daß** die Querschnittskontur der Ölnut (15) im Nutgrund (15a) verrundet ausgebildet ist. (Fig. 12)

## Claims

1. Synchroniser ring (1, 8, 11, 13, 17) made without chip removal for a synchronising device of an automotive vehicle transmission, said ring comprising
- an annular body (2) of generally conical configuration shaped out of sheet metal,
- an outer peripheral surface (4, 9) which tapers relative to the central longitudinal axis of the annular body (2),
- an inner peripheral surface (7) which tapers relative to the central longitudinal axis of the annular body (2),
wherein the synchroniser ring (1, 8, 11, 13, 17) comprises, on at least one of the said peripheral surfaces (4, 7, 9), a friction surface (5, 9a, 11 a, 13a, 17a), and the friction surface (5, 9a, 11 a, 13a, 17a) comprises at least one oil groove (6, 10, 12, 14, 15), **characterised in that** the friction surface (5, 9a, 11 a, 13a, 17a) is formed out of the material of the annular body (2), and that the oil groove (6, 10, 12, 14, 15)
- is made without chip removal,
- extends from a first axial end (5a) of the friction surface (5) to a second axial end (5b) of the friction surface (5),
- extends, as seen in longitudinal direction, with deviation from the axial direction and from the peripheral direction of the synchroniser ring (1, 8, 11, 13),
- comprises at least one axially open end (6a, 6b) that is flush with one of the axial ends (5a, 5b) of the friction surface (5), and
- and the crosssection of the oil groove (14, 15) varies along its length.

2. Synchroniser ring according to claim 1, **characterised in that** the friction surface (5, 7a, 17a) comprises several oil grooves (6, 15), and the oil grooves (6, 15) are spaced over the periphery of the friction surface (5, 9, 17a) and that the oil grooves (6, 15) extend obliquely to the peripheral direction of the synchroniser ring (1, 17). (Fig. 11)

3. Synchroniser ring according to claim 1 **characterised in that** the friction surface (5, 7a, 17a) comprises several oil grooves (6, 15), and the oil grooves (6, 15) are spaced over the periphery of the friction surface (5, 17a) and extend obliquely to the peripheral direction of the synchroniser ring (1, 17), and that the oil grooves (6, 15) are arranged in parallel relationship to one another. (Fig. 11)

4. Synchroniser ring according to claim 1, **characterised in that** the friction surface (9a, 13a) comprises several oil grooves (10, 14), and the oil grooves (10, 14) are spaced over the periphery of the friction surface (9a, 13a), and that the oil grooves extend in the form of a spiral. (Fig. 10)

5. Synchroniser ring according to claim 1, **characterised in that** the synchroniser ring (17) comprises, spaced over its periphery, radial through-apertures (16) that start from the friction surface (17a). (Fig. 11)

6. Synchroniser ring according to claim 5, **characterised in that** the radial through-apertures (16) start from the groove bottom (15a) of the oil groove (15). (Fig. 11, Fig. 12)

7. Synchroniser ring according to claim 1, **characterised in that** the crosssectional contour of the oil groove (15) has a rounded shape in the groove bottom (15a). (Fig. 12)

## Revendications

1. Anneau de synchronisation (1, 8, 11, 13, 17) fabriqué sans enlèvement de copeaux pour un dispositif de synchronisation d'une transmission de véhicule automobile, ledit anneau ayant
- un corps annulaire (2) qui est formé de tôle et a une configuration globalement conique,
- une surface périphérique extérieure (4, 9) en cône par rapport à l'axe longitudinal central du corps annulaire (2),
- une surface périphérique intérieure (7, 19, 24a) en cône par rapport à l'axe longitudinal central du corps annulaire (2),
l'anneau de synchronisation (1, 8, 11, 13, 17) comprenant, à au moins l'une desdites surfaces périphériques (4, 7, 9), une surface de friction (5, 9a, 11 a, 13a, 17a), et la surface de friction (5, 9a, 11a, 13a, 17a) étant pourvue d'au moins une rainure à l'huile (6, 10, 12, 14, 15), **caractérisé en ce que** la surface de friction (5, 9a, 11 a, 13a, 17a) est formée à partir du matériau du corps annulaire (2), et que la rainure à l'huile (6, 10, 12, 14, 15)
- est realisée sans enlèvement de copeaux,
- s'étend à partir d'une première extrémité axiale (5a) de la surface de friction (5) à une seconde extrémité axiale (5b) de la surface de friction (5),
- s'étend, en regardant dans la direction longitudinale, a l'écart de la direction axiale et de la direction périphérique de l'anneau de synchronisation (1, 8, 11, 13, 17),
- comprend au moins une extrémité axialement ouverte (6a, 6b) qui est à fleur de l'une des extrémités axiales (5a, 5b) de la surface de friction (5), et
- la section droite de la rainure à l'huile (14, 15) varie le long de son tracé.

2. Anneau de synchronisation selon la revendication 1, **caractérisé en ce que** la surface de friction (5, 7a, 17a) comprend plusieurs rainures à l'huile (6, 15), et les rainures à l'huile (5, 15) sont réparties sur la périphérie de la surface de friction (5, 9, 17a), et que les rainures à l'huile (6, 15) s'étendent en biais à la direction périphérique de l'anneau de synchronisation (1, 17). (figure 11)

3. Anneau de synchronisation selon la revendication 1, **caractérisé en ce que** la surface de friction (5, 7a, 17a) comprend plusieurs rainures à l'huile (6, 15), et les rainures à l'huile (6, 15, 20) sont réparties sur la périphérie de la surface de friction (5, 17a) et s'étendent en biais à la direction périphérique de l'anneau de synchronisation (1, 17), et que les rainures à l'huile (6, 15) sont parallèlement orientées l'une à l'autre. (figure 11)

4. Anneau de synchronisation selon la revendication 1, **caractérisé en ce que** la surface de friction (9a, 13a) comprend plusieurs rainures à l'huile (10, 14), et les rainures à l'huile (10, 14) sont réparties sur la périphérie de la surface de friction (9a, 13a), et que les rainures à l'huile s'étendent en spirale. (figure 10)

5. Anneau de synchronisation selon la revendication 1, **caractérisé en ce que** l'anneau de synchronisation (17) comprend des perçages radiaux (16) qui sont répartis sur sa périphérie en s'étendant à partir de la surface de friction (17a). (figure 11)

6. Anneau de synchronisation selon la revendication 5, **caractérisé en ce que** les perçages radiaux (16) s'étendent à partir du fond (15a) de la rainure à l'huile (15). (figure 11, figure 12)

7. Anneau de synchronisation selon la revendication 1, **caractérisé en ce que** le contour en section droite de la rainure à l'huile (15) a une configuration arrondie au fond (15a) de la rainure a l'huile (15). (figure 12)
